# EUROPEAN PATENT APPLICATION

(11) **EP 3 124 792 A1**
(43) Date of publication of application: **01.02.2017**
(21) Application number: 15768924.1
(22) Date of filing: 19.03.2015
(51) Int. Cl.: F04D 29/054, F04D 29/28, F04D 29/62

(54) **IMPELLER FASTENING STRUCTURE AND TURBO COMPRESSOR**

(30) Priority: 26.03.2014 JP 2014064179
(71) Applicant: IHI Corporation, Tokyo 135-8710 (JP)
(72) Inventor: TAKAHARA Nobusada, Tokyo 135-8710 (JP); KURIHARA Kazuaki, Tokyo 135-8710 (JP); IIDA Tsutomu, Tokyo 135-8710 (JP)
(74) Representative: Grünecker Patent- und Rechtsanwälte PartG mbB
(86) International application number: PCT/JP2015/058186
(87) International publication number: WO 2015/146765

(57) **Abstract**

An impeller fastening structure includes a rotating shaft (4d) in which an attachment hole (H) is formed on one end along an axis (L1) of the rotating shaft, an impeller (5a) in which a through hole (K) is formed along an axis (L2) of the impeller, a tension bolt (B) which is inserted into the through hole (K) and in which one end is screwed to attachment hole (H), and a nut (N) which is screwed to the other end of the tension bolt (B). The tension bolt (B) includes a protruding portion (b3) which protrudes in a radial direction at an intermediate portion in a direction of an axis (L3) of the bolt, and the rotating shaft (4d) includes a receiving portion (h1) which comes into contact with a tapered surface (b4) the protruding portion (b3) on an opening peripheral edge of the attachment hole (H).

## Description

### Technical Field

The present invention relates to an impeller fastening structure and a turbo compressor.

Priority is claimed on Japanese Patent Application No. 2014-064179, filed on March 26, 2014, the content of which is incorporated herein by reference.

### Background Art

Patent Document 1 below discloses a rotor of a turbo compressor. The rotor of the turbo compressor includes an impeller and a rotating shaft which supports the impeller, and includes a fastening mechanism which includes a mechanical coupling which is formed on an end surface of each of the impeller and the rotating shaft, a tension bolt which is inserted into a penetrating hole formed at a rotation center of the impeller, a fastening nut which is screwed to a first male screw which is formed on one end of the tension bolt, an accommodating hole which is formed on an end surface of the rotating shaft and accommodates a portion of an extension portion of the tension bolt, and a female screw which is formed on a bottom surface of the accommodating hole and is screwed to a second male screw formed on the other end of the tension bolt.

### Citation List

### Patent Document

[Patent Document 1] Japanese Unexamined Patent Application, First Publication No. 2008-133745

### Summary of Invention

### Technical Problem

The related art has the hollowing characteristics.
(1) When a second male screw of a tension bolt is screwed into a female screw formed on a rotating shaft, since the tension bolt is attached so as to be inclined with respect to the rotating shaft, excessive unbalance of a rotor may occur. This is because it is difficult to realize concentricity of a screw portion including a male screw and a female screw,
(2) Since the tension bolt is torque-fastened onto a terminating portion (innermost portion) of the female screw, a stop position (axial position) of the tension bolt with respect to the rotating shaft is not stabilized, and reproducibility of rotor assembly may not be secured.

The present invention is made in consideration of the above-described circumstances, and an object thereof is to solve the two characteristics.

### Solution to Problem

In a first aspect of the present invention, there is provided an impeller fastening structure including a rotating shaft in which an attachment hole is formed on one end along a first axis (the axis of the rotating shaft), an impeller in which a through hole is formed along a second axis (the axis of the impeller), a stud bolt which is inserted into the through hole and in which one end is screwed to the attachment hole, and a nut which is screwed to the other end of the stud bolt, in which the stud bolt includes a protruding portion which protrudes in a radial direction at an intermediate portion in an axial direction, and the rotating shaft includes a receiving portion which comes into contact with the protruding portion on an opening peripheral edge of the attachment hole.

In a second aspect of the present disclosure, in accordance with the first aspect, the protruding portion includes an inclined surface which is inclined with respect to a third axis which is an axis of the stud bolt, and the receiving portion includes a receiving surface which comes into contact with the inclined surface.

In a third aspect of the present disclosure, in accordance with the first aspect, the impeller fastening structure further includes a first centering portion for aligning the second axis and the first axis, and the protruding portion includes an orthogonal surface which is orthogonal to the third axis (the axis of bolt), and the receiving portion includes a receiving surface which comes into contact with the orthogonal surface.

In a fourth aspect of the present disclosure, in accordance with any one of the first to third aspects, a diameter of the one end of the stud bolt is larger than a diameter of the other end of the stud bolt.

In a fifth aspect of the present disclosure, in accordance with any one of the first to fourth aspects, the impeller fastening structure further includes a second centering portion for aligning the second axis and the third axis.

In a sixth aspect of the present disclosure, in accordance with any one of the third to fifth aspects, the impeller fastening structure further includes a third centering portion for aligning the first axis and the third axis.

In a seventh aspect of the present disclosure, there is provided a turbo compressor which includes a rotor in which a rotating shaft and an impeller are fastened to each other by the impeller fastening structure in accordance with any one of the first to sixth aspects.

In an eighth aspect of the present disclosure, there is provided an impeller fastening structure including a rotating shaft in which an attachment hole is formed on one end along a first axis, an impeller in which a through hole is formed along a second axis, a stud bolt which is inserted into the through hole and in which one end is screwed to the attachment hole, and a nut which is screwed to the other end of the stud bolt, in which the stud bolt includes an orthogonal surface orthogonal to a third axis, which is an axis of the stud bolt, on a tip of the one end side, and the rotating shaft includes a receiving portion which is orthogonal to the first axis and comes into contact with the orthogonal surface in an innermost portion of the attachment hole.

In a ninth aspect of the present disclosure, in accordance with the eighth aspect, a diameter of the one end of the stud bolt is larger than a diameter of the other end of the stud bolt.

In a tenth aspect of the present disclosure, in accordance with the eighth or ninth aspect, the impeller fastening structure further includes a first centering portion for aligning the second axis and the first axis.

In an eleventh aspect of the present disclosure, in accordance with any one of the eighth to tenth aspects, the impeller fastening structure further includes a second centering portion for aligning the second axis and the third axis.

In a twelfth aspect of the present disclosure, in accordance with any one of the eighth to eleventh aspects, the impeller fastening structure further includes a third centering portion for aligning the first axis and the third axis.

In a thirteenth aspect of the present disclosure, in accordance with the twelfth aspect, the impeller fastening structure further includes a third auxiliary centering portion for aligning the first axis and the third axis.

In a fourteenth aspect of the present disclosure, there is provided a turbo compressor which includes a rotor in which a rotating shaft and an impeller are fastened to each other by the impeller fastening structure in accordance with any one of the eighth to thirteenth aspects.

### Effects of Invention

According to the present invention, it is possible to solve the above-described characteristics of the related art.

That is, according to the present invention, since it is possible to prevent a stud bolt (tension bolt) from being attached so as to be inclined with respect to a rotating shaft, excessive unbalance of the rotor is not likely to occur.

In addition, according to the present invention, since a stop position of the stud bolt (tension bolt) with respect to the rotating shaft is stabilized, it is possible to secure reproducibility of rotor assembly.

### Brief Description of Drawings

FIG. 1 is a top view showing a schematic configuration of a turbo compressor 1 according to a first embodiment and second embodiment of the present invention.
FIG. 2 is a sectional view showing a main portion of the turbo compressor I according to the first embodiment and second embodiment of the present invention.
FIG. 3A is a sectional view showing an impeller fastening structure according to the first embodiment of the present invention.
FIG. 3B is a sectional view showing the impeller fastening structure according to the first embodiment of the present invention.
FIG. 4A is a sectional view showing an impeller fastening structure according to the second embodiment of the present invention.
FIG. 4B is a sectional view showing the impeller fastening structure according to the second embodiment of the present invention.
FIG. 5A is a sectional view showing an impeller fastening structure according to a modification example of the second embodiment of the present invention.
FIG. 5B is a sectional view showing the impeller fastening structure according to the modification example of the second embodiment of the present invention.
FIG. 6A is a sectional view showing an impeller fastening structure according to a third embodiment of the present invention.
FIG. 6B is a sectional view showing the impeller fastening structure according to the third embodiment of the present invention.

### Description of Embodiments

Hereinafter, a first embodiment and second embodiment of the present invention will be described with reference to the drawings. First, the entire configuration of a turbo compressor 1 common to the first and second embodiments will be described.

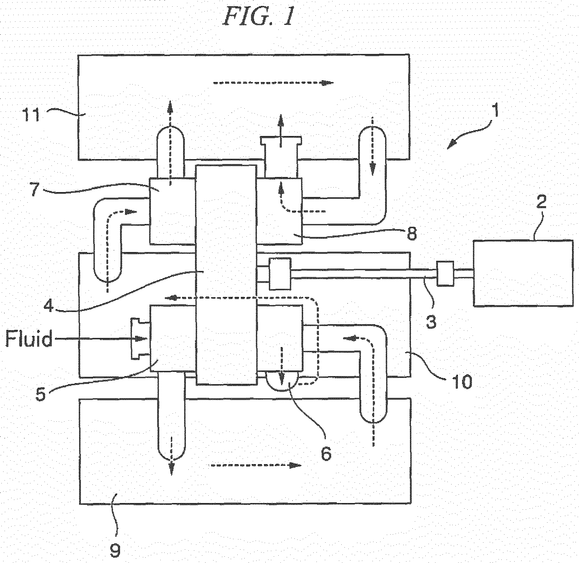

As shown in FIG 1. the turbo compressor 1 according to the present embodiments includes a drive motor 2, a connection shaft 3, a gearing device 4, a first-stage compression portion 5, a second-stage compression portion 6, a third-stage compression portion 7, a fourth-stage compression portion 8, a first intercooler 9, a second intercooler 10, and an after-cooler 11.

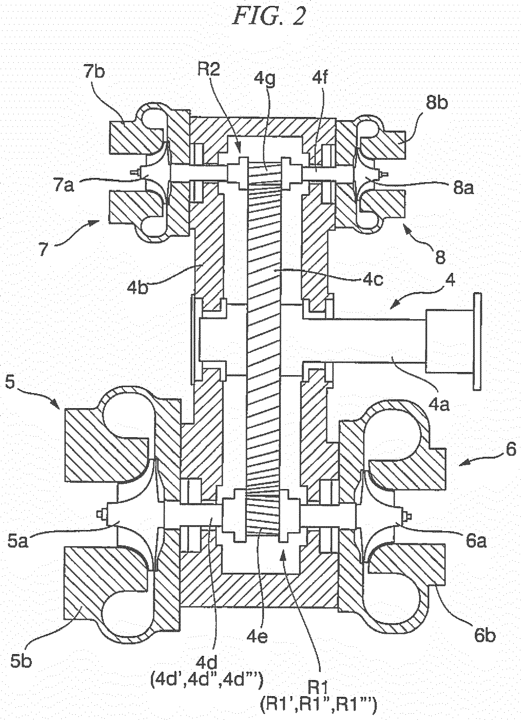

The drive motor 2 is a power source of a turbo compressor 1, and a rotating shaft is connected to one end of the connection shaft 3. One end of the connection shaft 3 is connected to the rotating shaft of the drive motor 2, and the other end thereof is connected to a drive shaft 4a (refer to FIG. 2) of the gearing device 4. The gearing device 4 is a power transmission device which increase a rotating speed of the drive motor 2 (that is, the connection shaft 3), and transmits the increased rotating speed to the first-stage compression portion 5, the second-stage compression portion 6, the third-stage compression portion 7, and the fourth-stage compression portion 8.

As shown by broken line arrows in FIG 1, the first-stage compression portion 5, the second-stage compression portion 6, the third-stage compression portion 7, the fourth-stage compression portion 8, the first intercooler 9, the second intercooler 10, and the after-cooler 11 are connected to each other in an order of the first-stage compression portion 5 → the first intercooler 9 → the second-stage compression portion 6 → the second intercooler 10 → the third-stage compression portion 7 → the after-cooler 11 → the fourth-stage compression portion 8 in a fluid passage.

The first-stage compression portion 5 is positioned at the most upstream in a passing path of a fluid, and compresses the fluid at a first stage and supplies the compressed fluid to the first intercooler 9. The first intercooler 9 cools the fluid (compressed fluid) supplied from the first-stage compression portion 5 and supplies the cooled fluid to the second-stage compression portion 6. The second-stage compression portion 6 compresses the compressed fluid supplied from the first intercooler 9 at a second stage and supplies the fluid to the second intercooler 10. The second intercooler 10 cools the compressed fluid supplied from the second-stage compression portion 6 and supplies the fluid to the third-stage compression portion 7.

The third-stage compression portion 7 compresses the compressed fluid supplied from the second intercooler 10 at a third stage and supplies the fluid to the after-cooler 11, The after-cooler 11 cools the compressed fluid supplied from the third-stage compression portion 7 and supplies the fluid to the fourth-stage compression portion 8. The fourth-stage compression portion 8 compresses the compressed fluid supplied from the after-cooler 11 at a fourth stage and supplies the fluid to the outside.

Sequentially, mechanical structures of the gearing device 4, the first-stage compression portion 5, the second-stage compression portion 6, the third-stage compression portion 7, and the fourth-stage compression portion 8 will be described in detail with reference to FIG. 2. A drive gear 4c which is rotatably supported by a housing 4b and has a relatively large diameter, is attached to the drive shaft 4a of the gearing device 4. The drive gear 4c engages with each of a first driven gear 4e which is provided at approximately the intermediate position of a first driven shaft (rotating shaft) 4d and has a smaller diameter than the diameter of the drive gear 4c, and a second driven gear 4g which is provided at approximately the intermediate position of a second driven shaft 4f and has a smaller diameter than the diameter of the drive gear 4c.

The first driven shaft 4d is rotatably supported by the housing 4b in a state where the first driven shaft 4d is parallel with the drive shaft 4a, a first impeller (impeller) 5a is attached to one end of the first driven shaft 4d, and a second impeller 6a is attached to the other end of the first driven shaft 4d. Similarly to the first driven shaft 4d, the second driven shaft 4f is rotatably supported by the housing 4b in a state where the second driven shaft 4f is parallel with the drive shaft 4a, a third impeller 7a is attached to one end of the second driven shaft 4f, and a fourth impeller 8a is attached to the other end of the second driven shaft 4f.

The first impeller 5a is accommodated in a first impeller casing 5b which is provided on a side portion of the housing 4b of the gearing device 4, the second impeller 6a is accommodated in a second impeller casing 6b which is provided on a side portion opposite to the first impeller casing 5b in a state the housing 4b of the gearing device 4 is interposed between the first impeller casing 5b and the second impeller casing 6b, the third impeller 7a is accommodated in a third impeller casing 7b which is provided on a side portion of the housing 4b of the gearing device 4, and the fourth impeller 8a is accommodated in a fourth impeller casing 8b which is provided on a side portion opposite to the third impeller casing 7b in a state where the housing 4b of the gearing device 4 is interposed between the third impeller casing 7b and the fourth impeller casing 8b.

An intake passage of fluid, a diffuser channel, and a scroll channel (exhaust channel) are formed inside the first impeller casing 5b, the second impeller casting 6b, the third impeller casing 7b, and the fourth impeller casing 8b. Moreover, a rotating body including the first driven shaft 4d, the First driven gear 4e, the first impeller 5a, and the second impeller 6a is referred to as a first rotor R1, and a rotating body including the second driven shaft 4f, the second driven gear 4g, the third impeller 7a, and the fourth impeller 8a is referred to as a second rotor R2.

In the turbo compressor 1, the number of teeth of the first driven gear 4e is set to smaller than the number of teeth of the drive gear 4c, a rotation speed of the drive motor 2 (that is, the connection shaft 3) is increased by a speed increasing ratio (first speed increasing ratio) according to a ratio (first teeth number ratio) between the number of teeth of the drive shaft 4c and the number of teeth of the first driven gear 4e, and the increased rotation speed is transmitted to the first driven shaft 4d. In addition, in the turbo compressor 1, the number of teeth of the second driven gear 4g is to smaller than the number of teeth of the drive gear 4c, the rotation speed of the drive motor 2 (that is, the connection shaft 3) is increased by a speed increasing ratio (second speed increasing ratio) according to a ratio (second teeth number ratio) between the number of teeth of the drive shaft 4c and the number of teeth of the second driven gear 4g, and the increased rotation speed is transmitted to the second driven shaft 4f.

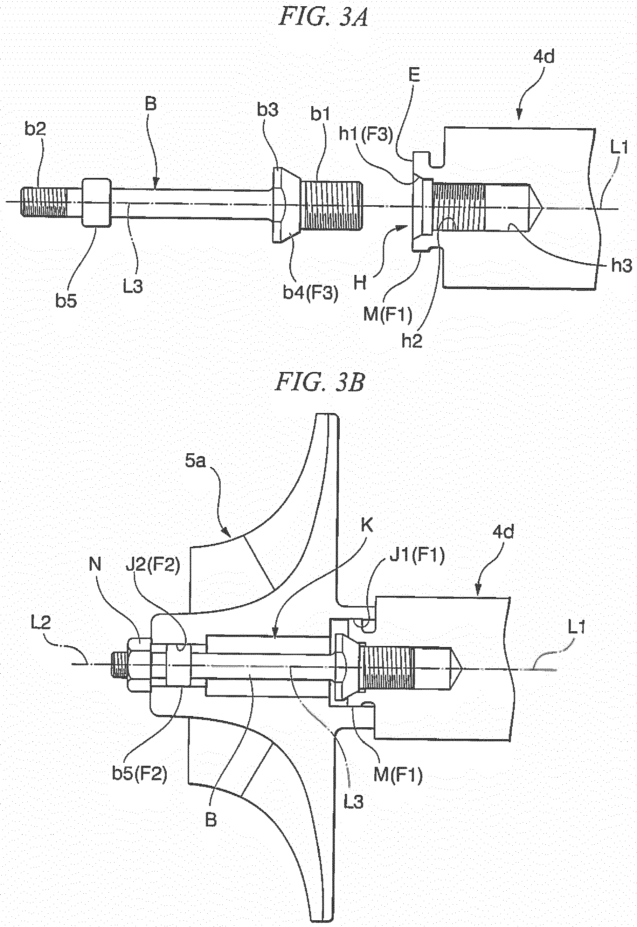

Next, an impeller fastening structure according to the first embodiment of the present invention, that is, fastening structures of the first impeller 5a and the second impeller 6a with respect to the first driven shaft 4d and fastening structures of the third impeller 7a and the fourth impeller 8a with respect to the second driven shaft 4f will be described with reference to FIGS. 3A and 3B. In addition, since the four fastening structures are the same as one another, hereinafter, as the representative, the fastening structure of the first impeller 5a with respect to the first driven shaft 4d will be described.

As shown in FIG 3A, an attachment hole H, which extends in a direction along a first axis (axis L1 of rotating shaft), is formed in the vicinity of the center of one end surface E of the first driven shaft 4d. In addition, a polygonal fitting surface (shaft fitting surface M), which is coaxial with the axis L1 of the rotating shaft and has a predetermined width in the direction of the axis L 1 of the rotating shaft, is formed on the outer circumference of the one end surface E. In addition, the one end surface E is an orthogonal surface which is orthogonal to the axis L1 of the rotating shaft.

As shown in FIG. 3B, a through hole K is formed in the first impeller 5a along a second axis (axis L2 of the impeller). The first impeller 5a is fixed to one end of the first driven shaft 4d by a tension bolt B (stud bolt) and a nut N.

In the through hole K, a polygonal fitting surface (first impeller fitting surface J1), which is coaxial with the axis L2 of the impeller and has a predetermined width in the direction of the axis L2 of the impeller, is formed on the first driven shaft 4d side. The first impeller fitting surface J1 is fitted to the above-described shaft fitting surface M. Accordingly, the axis L2 of the impeller is coaxial with the axis L1 of the rotating shaft. The first impeller fitting surface J1 and the shaft fitting surface M configures a first centering portion F1. Moreover, in the through hole K, a cylindrical fitting surface (second impeller fitting surface J2), which is coaxial with the axis L2 of the impeller and has a predetermined width in the direction of the axis L2 of the impeller, is formed on the nut N side The first centering portion F1 prevents the falling of the first impeller 5a.

The first centering portion F1 adopts a polygon fit in which the shaft fitting surface M and the first impeller fitting surface J1 having a polygon shape are fitted to each other. However, instead of this, the first centering portion F1 may adopt a spigot joint (columnar spigot joint) in which the shaft fitting surface M and the first impeller fitting surface J1 are formed in columnar shapes.

As shown in FIG. 3A, the tension bolt B is a rod-shaped member having a predetermined length and is a stud bolt which includes a first male screw portion b1 having a predetermined length on one end of the tension bolt B, and a second male screw portion b2 having a predetermined length on the other end thereof. As shown in the drawings, a diameter of the first male screw portion b1 is slightly larger than a diameter of the second male screw portion b2. For example, the diameter of first male screw portion b1 is 1.2 to 2.0 times of the diameter of the second male screw portion b2.

In the tension bolt B, a cylindrical fitting surface (bolt fitting surface b5) is provided inside the second male screw portion b2 (that is, on the first male screw portion b1 side) so as to be adjacent to the second male screw portion b2. The bolt fitting surface b5 is a cylindrical surface which is coaxial with a third axis (axis L3 of bolt) and has a predetermined width in the direction of the axis L3 of the bolt, and is fitted to the above-described second impeller fitting surface J2. The bolt fitting surface b5 and the second impeller fitting surface J2 configures a second centering portion F2 (spigot joint) for aligning (for allowing the axis L2 and the axis L3 to be coaxial with each other) the axis L2 of the impeller and the axis of the tension bolt B (the axis L3 of the bolt). The second centering portion F2 secondarily prevents the falling of the first impeller 5a.

The tension bolt B includes a protruding portion b3 which protrudes in a radial direction (a direction orthogonal to the axis L3 of the bolt) at an intermediate portion in the direction (axial direction) of the third axis (the axis L3 of the bolt), for example, at a position adjacent to the first male screw portion b1 as shown in the drawings. Here, as described below, when the first male screw portion b1 of the tension bolt B is screwed to a female screw portion h2 of the first driven shaft 4d, a fastening force from a tool such as a wrench is transmitted to the tension bolt B via the protruding portion b3. As shown in FIG. 3A, the protruding portion b3 includes a tapered surface b4 (inclined surface) which is linearly inclined with respect to the axis L3 of the bolt. For example, an inclination angle of the tapered surface b4 is 30° to 45°.

That is, the tapered surface b4 is an annular surface which extends so as to be continuous around the axis L3 of the bolt about the axis L3 of the bolt and has a diameter which gradually decreases toward the first male screw portion b1. In the tapered surface b4, a diameter of a portion closest to the first male screw portion b1 is the same as the diameter of the first male screw portion b1. As shown in the drawings, a slight gap is provided between the first male screw portion b1 and the tapered surface b4 of the protruding portion b3.

As shown in FIG. 3A, a receiving surface h1 (receiving portion), which comes into contact with the tapered surface b4, is provided at an opening peripheral edge (inlet peripheral edge) of the attachment hole H of the first driven shaft 4d. The receiving surface h1 is a tapered surface which is linearly inclined with respect to the axis L1 of the rotating shaft Moreover, the receiving surface h1 is an annular surface which extends so as to be continuous around the axis L1 of the rotating shaft about the axis L1 of the rotating shaft and has a diameter which gradually decreases as it goes away from the one end surface E. The inclination angle of the receiving surface h1 is the same as the inclination angle of the tapered surface b4 of the tension bolt B.

The female screw portion h2 having a predetermined length is provided on the inner side of the receiving surface h1 in a state where a slight gap (first dampening portion) is interposed therebetween, and an incomplete screw portion h3 (second dampening portion) is formed on the inner side (innermost portion) of the female screw portion h2. The first dampening portion and the second dampening portion have diameters which are slightly larger than the diameter of the female screw portion h2.

In the impeller fastening structure, the tension bolt B is attached to the first driven shaft 4d by screwing the first male screw portion b1 of the tension bolt B to the female screw portion h2 of the first driven shaft 4d. Since a slight clearance (movement freedom) exists between the first male screw portion b1 and the female screw portion h2, the axis L3 of the bolt of the tension bolt B is not coaxial with the axis L1 of the rotating shaft of the first driven shaft 4d by simply screwing the first male screw portion b1 to the female screw portion h2.

However, since the tapered surface b4 is provided on the tension bolt B and the receiving surface h1 is provided on the first driven shaft 4d, the tapered surface b4 and the receiving surface h1 come into contact with each other by screwing the first male screw portion b1 to the female screw portion h2, and the axis L3 of the bolt of the tension bolt R is coaxial with the axis L1 of the rotating shaft of the first driven shaft 4d. That is, the tapered surface b4 of the tension bolt B and the receiving surface h1 function as a third centering portion F3 for aligning the axis L 1 of the rotating shaft and the axis of the tension bolt B (the axis L3 of the bolt) (allows the axis L1 of the rotating shaft and the axis L3 of the bolt to be coaxial with each other). The third centering portion F3 prevents the falling of the tension bolt B.

The tension bolt B which is attached so as to be coaxial with the first driven shaft 4d is inserted into the through hole K, the second male screw portion b2 of the tension bolt B is exposed from the first impeller 5a, and the first impeller 5a is attached to the first driven shaft 4d by screwing the nut N to the second male screw portion b2.

The axis L1 of the rotating shaft of the first driven shaft 4d and the axis L2 of the first impeller 5a (axis L2 of the impeller) are coaxial with each other by the above-described first centering portion F1, the falling of the first impeller 5a is prevented and the axis L3 of the bolt of the tension bolt B and the axis L2 of the impeller of the first impeller 5a are coaxial with each other by the second centering portion F2, and the falling of the tension bolt B is prevented and the axis L1 of the rotating shaft and the axis L3 of the bolt of the tension bolt B are coaxial with each other by the third centering portion F3. In this way, in the state where the three members are coaxial with each other, the first impeller 5a is fixed to the first driven shaft 4d via the tension bolt B by screwing the nut N to the second male screw portion b2. Moreover, fastening torque is controlled with respect to the nut N such that a predetermined axial force is generated in the tension bolt B.

According to the impeller fastening structure, a fastening depth of the first male screw portion b1 of the tension bolt B with respect to the attachment hole H of the first driven shaft 4d, that is, a positional relationship between the tension bolt B and the first male screw portion b1 in the direction of the axis L1 of the rotating shaft (axis L3 of the bolt) is regulated to a state where the first male screw portion b1 does not reach the incomplete screw portion h3 by the tapered surface b4 of the tension bolt B coming into contact with the receiving surface h1 of the first driven shaft 4d, as shown in FIG. 3B.

Accordingly, it is possible to prevent the axis L3 of the bolt of the tension bolt B from being inclined with respect to the axis L1 of the rotating shaft of the first driven shaft 4d, and as a result, it is possible to prevent unbalance of the first rotor R1 from being excessive, and it is possible to sufficiently secure reproducibility of assembly of the first rotor R1.

In addition, according to the impeller fastening structure, since the diameter of the first male screw portion b1 is larger than the diameter of the second male screw portion b2, fastening torque when the first male screw portion b1 is fastened to the female screw portion h2 is larger than fastening torque when the nut N is fastened to the second male screw portion b2. Accordingly, it is possible to prevent the tension bolt B from being rotated together with the nut N when the nut N is fastened to the second male screw portion b2. The fastening torque of the tension bolt B is set such that the axial force generated by the fastening torque of the tension bolt B is larger than the axial force generated by the fastening torque of the nut N, and the contact surfaces of the tension bolt B and the first driven shaft 4d, that is, the tapered surface b4 and the receiving surface h1 need to be not separated from each other.

In the impeller fastening structure according to the first embodiment, the tapered surface b4 which is linearly inclined with respect to the axis L3 of the bolt is provided as the inclined surface. However, the inclined surface is not limited to the tapered surface b4, and for example, may be a curved surface having a predetermined curvature radius. As the curved surface, a curved surface protruding from the axis L3 of the bolt or a curved surface recessed from the axis L3 of the bolt may be considered. However, preferably, the curved surface is the protruding curved surface.

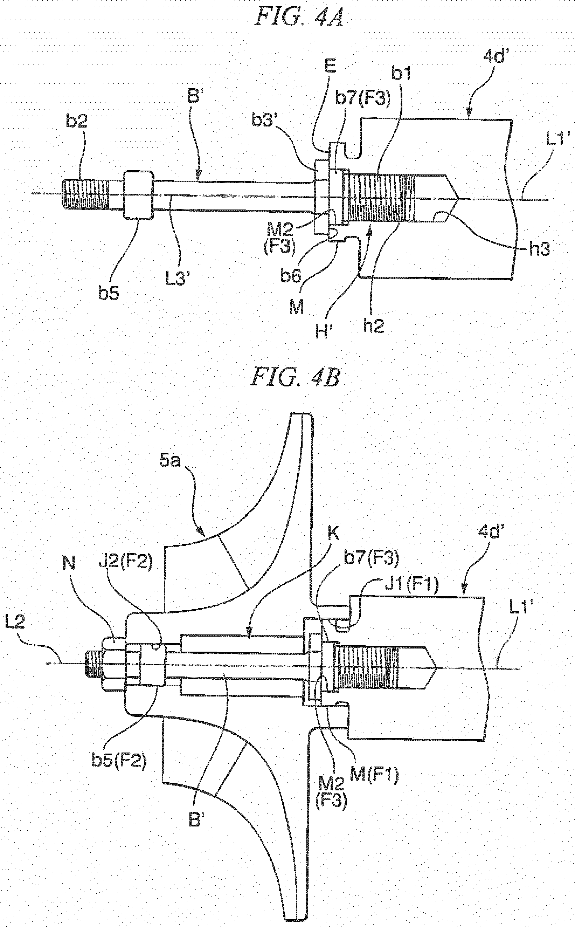

Next, an impeller fastening structure according to a second embodiment of the present invention will be described with reference to FIGS. 2, 4A, and 4B. Also in the second embodiment, as the representative, a fastening structure of the first impeller 5a of the first rotor R1', which is the rotating body including the first impeller 5a and the second impeller 6a in FIG. 2, with respect to a first driven shaft (rotating shaft) 4d' will be described. In FIGS. 4A and 4B, the same reference numerals are assigned to the same components as those of FIGS. 3A and 3B.

As shown in FIGS. 4A and 4B, in the impeller fastening structure according to the second embodiment, instead of the tension bolt B including the protruding portion b3 of the above-described first embodiment, a tension bolt B' (stud bolt) including a protruding portion b3' is adopted. The protruding portion b3' includes an orthogonal surface b6 which is orthogonal to the axis L3' of the bolt of the tension bolt B', instead of the tapered surface b4 of the protruding portion b3. That is, the orthogonal surface b6 is an annular surface which extends so as to be continuous around the axis L3' of the bolt about the axis L3' of the bolt.

In the tension bolt B', a second bolt fitting surface b7 is provided so as to be more adjacent to one end side of the tension bolt B' than the protruding portion b3' in the direction of the axis L3' of the bolt. The second bolt fitting surface b7 is a cylindrical fitting surface which is coaxial with the axis L3' of the bolt and has a predetermined width in the direction of the axis L3' of the bolt.

In the impeller fastening structure according to the second embodiment, instead of the first driven shaft 4d of the first embodiment, a first driven shaft 4d' is adopted. The first driven shaft 4d' includes an attachment hole H' instead of the attachment hole H of the first embodiment. As shown in FIG 4A, in the attachment hole H', one end surface E (orthogonal surface orthogonal to the axis L1' of the rotating shaft) becomes a receiving surface (receiving portion) which comes into contact with the orthogonal surface b6.

In the attachment hole H', a female screw portion h2 having a predetermined length is provided at a position close to the one end surface E (receiving surface), and the incomplete screw portion h3 is formed on the inner side (innermost portion) of the female screw portion h2. A cylindrical fitting surface (second shaft fitting surface M2), which is coaxial with the axis L1' of the rotating shaft and has a predetermined width in the direction of the axis L1' of the rotating shaft, is formed on the opening peripheral edge (inlet peripheral edge) of the attachment hole H' on a side closer to the other end of the tension bolt B' than the female screw portion h2. The second shaft fitting surface M2 is fitted to the above-described second bolt fitting surface b7. Accordingly, the axis L1' of the rotating shaft is coaxial with the axis L3' of the bolt. The second shaft fitting surface M2 and the second bolt fitting surface b7 configures the third centering portion F3 (spigot joint). The third centering portion F3 prevents the falling of the tension bolt B'.

According to the impeller fastening structure, as shown in FIG. 4A, a positional relationship between the tension bolt B' and the first driven shaft 4d' in the direction of the axis L1' of the rotating shaft (axis L3' of the bolt) is regulated to a state where the first male screw portion b1 does not reach the incomplete screw portion h3 by the orthogonal surface b6 of the tension bolt B' coming into contact with the one end surface E (the receiving surface) of the first driven shaft 4d'.

Accordingly, it is possible to prevent the axis L3' of the bolt of the tension bolt B' from being inclined with respect to the axis L1' of the rotating shaft of the first driven shaft 4d', and as a result, it is possible to prevent unbalance of the first rotor R1' from being excessive, and it is possible to sufficiently secure reproducibility of assembly of the first rotor R1'

In addition, according to the impeller fastening structure, since the diameter of the first male screw portion b is larger than the diameter of the second male screw portion b2, the fastening torque when the first male screw portion b1 is fastened to the female screw portion h2 can be set so as to be larger than the fastening torque when the nut N is fastened to the second male screw portion b2. Accordingly, it is possible to prevent the tension bolt B' from being rotated together with the nut N when the nut N is fastened to the second male screw portion b2. The fastening torque of the tension bolt B' is set such that the axial force generated by the fastening torque of the tension bolt B' is larger than the axial force generated by the fastening torque of the nut N, and, preferably, the contact surfaces of the tension bolt B' and the first driven shaft 4d', that is, the orthogonal surface b6 and the one end surface E are not separated from each other.

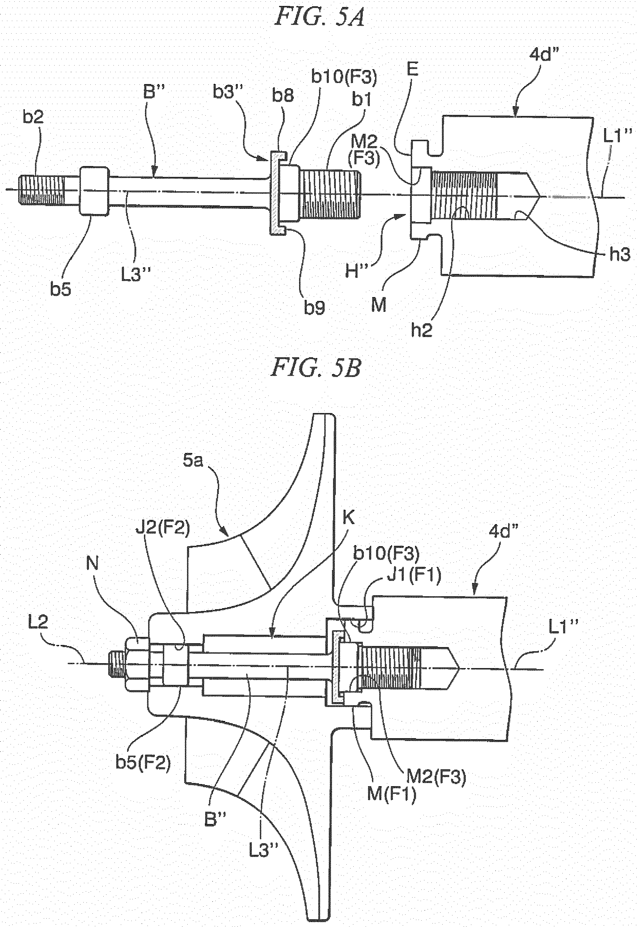

As an impeller fastening structure according to a modification example of the second embodiment, a structure shown in FIGS. 5A and 5B is considered. Also in the modification example of the second embodiment, as the representative, a fastening structure of the first impeller 5a of a first rotor R1", which is the rotating body including the first impeller 5a and the second impeller 6a in FIG. 2, with respect to a first driven shaft (rotating shaft) 4d" will be described. In addition, in FIGS. 5A and 5B, the same reference numerals are assigned to the same components as those of FIGS. 3A and 3B.

That is, in the impeller fastening structure according to the modification example, instead of the above-described protruding portion b3', a tension bolt B" (stud bolt) including a protruding portion b3" is adopted. The protruding portion b3" includes a protruding portion b8 in which the outer circumferential portion protrudes toward the first male screw portion b1 side in the direction of the axis L3" of the bolt, and an orthogonal surface b9 which is orthogonal to the axis L3" of the bolt on the tip of the protruding portion b8.

The orthogonal surface b9 is an annular surface which extends so as to be continuous around the axis L3" of the bolt about the axis L3" of the bolt. That is, the orthogonal surface b9 of the modification example comes into contact with the one end surface E (receiving surface) of the first driven shaft 4d" at a position where the protruding portion b8 exists, that is at a position further away from the axis L3" of the bolt (axis L3' of the bolt) than the orthogonal surface b6 of the above-described second embodiment,

In the first driven shaft 4d", since an attachment hole H" is formed on the one end surface E (receiving surface) by machining (drilling), slight distortion in flatness of the one end surface E (receiving surface) may occur in the vicinity of the attachment hole H" due to the machining. The axis L3" of the bolt may be inclined with respect to the axis L1" of the rotating shaft due to the distortion. With respect to the above-described circumstances, in the modification example, since the orthogonal surface b9 of the tension bolt B" comes into contact with the one end surface E (receiving surface) of the first driven shaft 4d" at a position which is slightly separated from the attachment hole H", it is possible to more securely prevent the axis L3" of the bolt from being inclined with respect to the axis L1" of the rotating shaft relative to the second embodiment.

In the tension bolt B", a second bolt fitting surface b10 is provided so as to be adjacent to the protruding portion b3" in the direction of the axis L3" of the bolt. The second bolt fitting surface b10 is a cylindrical fitting surface which is coaxial with the axis L3" of the bolt and has a predetermined width in the direction of the axis L3" of the bolt.

A second shaft fitting surface M2 similar to that of the second embodiment is fitted to the above-described second bolt fitting surface b10. Accordingly, the axis L1" of the rotating shaft is coaxial with the axis L3" of the bolt. The second shaft fitting surface M2 and the second bolt fitting surface b10 configures the third centering portion F3 (spigot joint), and the third centering portion F3 prevents the falling of the tension bolt B".

Similarly to the second embodiment, since the diameter of the first male screw portion b is larger than the diameter of the second male screw portion b2, the fastening torque when the first male screw portion b1 is fastened to the female screw portion h2 can be set so as to be larger than the fastening torque when the nut N is fastened to the second male screw portion b2. Accordingly, it is possible to prevent the tension bolt B" from being rotated together with the nut N when the nut N is fastened to the second male screw portion b2. The fastening torque of the tension bolt B" is set such that the axial force generated by the fastening torque of the tension bolt B" is larger than the axial force generated by the fastening torque of the nut N, and, preferably, the contact surfaces of the tension bolt B" and the first driven shaft 4d", that is, the orthogonal surface b9 and the one end surface E are not separated from each other.

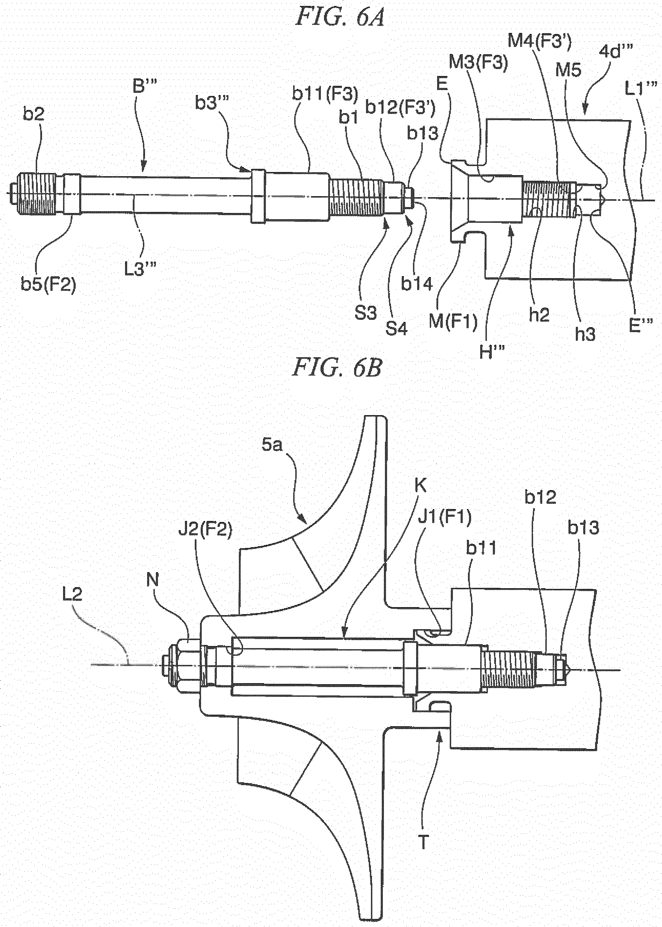

Next, an impeller fastening structure according to a third embodiment of the present invention will be described with reference to FIGS. 6A and 6B. Also in the third embodiment, as the representative, a fastening structure of the first impeller 5a of the first rotor R1"', which is the rotating body including the first impeller 5a and the second impeller 6a in FIG. 2, with respect to a first driven shaft (rotating shaft) 4d'" will be described. In addition, in FIGS. 6A and 6B, the same reference numerals are assigned to the same components as those of FIGS. 3A and 3B.

As shown in FIGS. 6A and 6B, in the impeller fastening structure according to the third embodiment, instead of the tension bolt B including the protruding portion b3 of the above-described first embodiment, a tension bolt B'" (stud bolt) including a protruding portion b3'" is adopted. In the protruding portion b3"', a surface, in which machining accuracy may be required, such as the tapered surface b4 of the protruding portion b3 of the first embodiment or the orthogonal surface b6 of the protruding portion b3' of the second embodiment is not provided, and any configuration may be provided as long as a fastening force from a tool such as wrench is transmitted to the tension bolt B'" via the protruding portion b3"' when the first male screw portion b1 of the tension bolt B'" is screwed to the female screw portion h2 of the first driven shaft 4d"'.

The tension bolt B'" includes a second bolt fitting surface b11 on one end side of the tension bolt B"' from the protruding portion b3"' in the direction of the axis L3'" of the bolt. The second bolt fitting surface b11 is a cylindrical fitting surface which is coaxial with the axis L3'" of the bolt and has a predetermined width in the direction of the axis L3'" of the bolt.

The first male screw portion b 1 of the tension bolt B"' is provided on one end side of the tension bolt B'" from the second bolt fitting surface b11, and a third bolt fitting surface b12 is provided on one end side of the tension bolt B'" from the first male screw portion b1. The third bolt fitting surface b12 also is a cylindrical fitting surface which is coaxial with the axis L3"' of the bolt and has a predetermined width in the direction of the axis L3"' of the bolt.

A cylindrical portion b13 which is coaxial with the axis L3'" of the bolt and has a predetermined width in the direction of the axis L3"' of the bolt is provided on one end side of the tension bolt B"' from the third bolt fitting surface b12, and an orthogonal surface b14 orthogonal to the axis L3'"' of the bolt is provided on the tip of the cylindrical portion b14 on one end side of the tension bolt B"'.

In the impeller fastening structure according the third embodiment, instead of the first driven shaft 4d of the first embodiment, a first driven shaft 4d'" is adopted. The first driven shaft 4d"' includes an attachment hole H"' instead of the attachment hole H of the first embodiment.

In the attachment hole H"", as shown in FIG. 6A, a cylindrical fitting surface (second shaft fitting surface M3) which is coaxial with the axis L1"' of the rotating shaft and has a predetermined width in the direction of the axis L1"' of the rotating shaft is formed at a location proceeding toward the inner side of the attachment hole H'" by a predetermined distance from the one end surface E of the attachment hole H"'. The second shaft fitting surface M3 is fitted to the above-described second bolt fitting surface b11. Accordingly, the axis L1"' of the rotating shaft is coaxial with the axis L3"' of the bolt. The second shaft fitting surface M3 and the second bolt fitting surface b11 configures the third centering portion F3 (spigot joint), and the third centering portion F3 prevents the falling of the tension bolt B"'.

The female screw portion h2 which is screwed to the first male screw portion b1 and has a predetermined length is provided so as to be adjacent to the inner side of the attachment hole H'" from the second shaft fitting surface M3, and a cylindrical fitting surface (third shaft fitting surface M4) which is coaxial with the axis L1"' of the rotating shaft and has a predetermined width in the direction of the axis of the rotating shaft L1"' is formed on the inner side of the attachment hole H'" from the female screw portion h2. The third shaft fitting surface M4 is fitted to the above-described third bolt fitting surface b12. Accordingly, the axis L1'" of the rotating shaft is coaxial with the axis L3'" of the bolt. The third shaft fitting surface M4 and the third bolt fitting surface b12 configure a third auxiliary centering portion F3' (spigot joint), and the third auxiliary centering portion F3' secondarily prevents the falling of the tension bolt B"'.

A cylindrical surface M5 which is coaxial with the axis L1'" of the rotating shaft and has a predetermined width in the direction of the axis L1"' of the rotating shaft is formed so as to be adjacent to the inner side of the attachment hole H'" from the third shaft fitting surface M4, and one end surface E"' orthogonal to the axis L1"' of the rotating shaft is formed on the innermost portion of the cylindrical surface M5. The one end surface E'" becomes a receiving surface (receiving portion) which comes into contact with the orthogonal surface b14.

In the impeller fastening structure, as shown in FIG. 6A, in a positional relationship between the tension bolt B"' and the first driven shaft 4d'" in the direction of the axis L1"' of the rotating shaft (axis L3'" of the bolt), the position of the tension bolt B"' in the direction of the axis L3'" of the bolt is regulated by the orthogonal surface b14 of the tension bolt B'" coming into contact with the one end surface F"' (the receiving surface) of the first driven shaft 4d"'. and the first male screw portion b1 does not reach the incomplete screw portion h3.

Accordingly, it is possible to prevent the axis L3"' of the bolt of the tension bolt B'" from being inclined with respect to the axis L1"' of the rotating shaft of the first driven shaft 4d"', and as a result, it is possible to prevent unbalance of the first rotor R1"' from being excessive, and it is possible to sufficiently secure reproducibility of assembly of the first rotor R1"'.

In general, in a case where a thickness of a hollow columnar portion T provided on the first driven shaft 4d'" side of the first impeller 5a is small, when the first impeller 5a rotates at a high speed, the hollow columnar portion T may be deformed in a direction, in which the diameter of the hollow columnar portion T increases in the radial direction of the first impeller 5a, by a centrifugal force. If the follow columnar portion T is deformed in a direction in which the diameter increases in the radial direction of the first impeller 5a, unbalance of the first rotor R1"' may increase. According to the third embodiment, since the orthogonal surface b14 of the tension bolt B"' comes into contact with the one end surface E'" (receiving surface) of the first driven shaft 4d"', the position of the tension bolt B"' in the axis L3'" of the bolt is regulated. Accordingly, the protruding portion b3"' is not related to the regulation of the position in the direction of the axis L3'" of the bolt. As a result, the protruding portion b3"' can be formed so as to have a small diameter, and as shown in FIG. 6B, it is possible to increase the thickness of the hollow columnar portion T around the protruding portion b3"', and as a result, it is possible to prevent the hollow columnar portion T from being deformed due to a centrifugal force. Accordingly, the third embodiment is appropriately applied to a case where the deformation of the hollow columnar portion T of the first impeller 5a generated due to the centrifugal force may be required so as to be decreased.

In addition, according to the impeller fastening structure, since the orthogonal surface b14 comes into contact with the one end surface E"', a stationary friction force is generated between the orthogonal surface b14 and the one end surface E"'. Accordingly, when the nut N is fastened to the second male screw portion b2, it is possible to prevent the tension bolt B'" from being rotated together with the nut N. Therefore, it is possible to secure reproducibility of assembly of the first rotor R1"'.

In the third embodiment, the second shaft fitting surface M3 and the second bolt fitting surface b11 configures the third centering portion F3 (spigot joint), and the third shaft fitting surface M4 and the third bolt fitting surface b12 configures a third auxiliary centering portion F3' (spigot joint). However, only the third centering portion F3 may he provided. In a case where both of the third centering portion F3 and the third auxiliary centering portion F3' are provided, even though the tension bolt B'" is long, it is possible to allow the axis L1"' of the rotating shaft and the axis L3"' of the bolt to be coaxial with each other. Here, for example, a plurality of third auxiliary centering portions F3'may be provided according to the length of the tension bolt B"'.

In the tension bolt B'", as shown in FIG 6A, a slight gap S3 may be formed between the first male screw portion b1 and the third bolt fitting surface b12 adjacent to each other, and a slight gap S4 may be formed between the third bolt fitting surface b12 and the cylindrical portion b13 adjacent to each other.

In the third embodiment, as shown in FIG. 6B, the shape of the opening peripheral edge of the attachment hole H'" of the first driven shaft 4d'" is particularly not limited as long as the opening peripheral edge does not interfere with the protruding portion b3"' of the tension bolt B"' when the tension bolt B"' is screwed to the first driven shaft 4d"'. However, preferably, the shape of the opening peripheral edge is a taper shape as shown in FIGS. 6A and 6B.

In the embodiments and the modifications examples, the impeller fastening structure according to the present invention is applied to the fastening between the impeller and the rotating shaft in a turbo compressor having a four-stage configuration. However, the present invention is not limited to this. The impeller fastening structure according to the present invention may be applied to various compressors having a stage configuration other than the four-stage configuration, or a rotating machine other than the turbo compressor, for example, a turbocharger.

### Industrial Applicability

Since it is possible to prevent a stud bolt (tension bolt) from being attached to be inclined with respect to a rotating shaft, there is no possibility of excessive unbalance of a rotor occurring.

According to the present invention, since a stop position of the stud bolt (tension bolt) with respect to the rotating shaft is stable, it is possible to secure reproducibility of rotor assembly.

### Reference Signs List

I: turbo compressor, 2: drive motor, 3: connection shaft, 4: gearing device, 5: first-stage compression portion, 6: second-stage compression portion, 7: third-stage compression portion, 8: fourth-stage compression portion, 9: first intercooler, 10: second intercooler, 11: after-cooler, 4d, 4d', 4d", 4d"': first driven shaft, 4f: second driven shaft, 5a: first impeller, 6a: second impeller, 7a: third impeller, 8a: fourth impeller, E, E"': one end surface, H, H', H", H"': attachment hole, h1: receiving surface, h2: female screw portion, h3: incomplete screw portion, J1: first impeller fitting surface, J2: second impeller fitting surface, K: through hole, L1, L1', L1", L1"': axis of rotating shaft, L2: axis of impeller, L3, L3', L3", L3"': axis of bolt, B, B', B", B"': tension bolt (stud bolt), b1: first male screw portion, b2: second male screw portion, b3, b3', b": protruding portion, b4: tapered surface, b5: bolt fitting surface, b6, b9, b14: orthogonal surface, b7: second bolt fitting surface, b8: protruding portion, M: shaft fitting surface, M2: second shaft fitting surface, N: nut, R1: first rotor, R2: second rotor

## Claims

1. An impeller fastening structure, comprising: a rotating shaft in which an attachment hole is formed on one end along a first axis; an impeller in which a through hole is formed along a second axis; a stud bolt which is inserted into the through hole and in which one end is screwed to the attachment hole; and a nut which is screwed to the other end of the stud bolt,
wherein the stud bolt includes a protruding portion which protrudes in a radial direction at an intermediate portion in a direction of a third axis which is an axis of the stud bolt, and
wherein the rotating shaft includes a receiving portion which comes into contact with the protruding portion on an opening peripheral edge of the attachment hole.

2. The impeller fastening structure according to claim 1,
wherein the protruding portion includes an inclined surface which is inclined with respect to the third axis, and
wherein the receiving portion includes a receiving surface which comes into contact with the inclined surface.

3. The impeller fastening structure according to claim 1, further comprising:
a first centering portion for aligning the second axis and the first axis,
wherein the protruding portion includes an orthogonal surface which is orthogonal to the third axis, and the receiving portion includes a receiving surface which comes into contact with the orthogonal surface.

4. The impeller fastening structure according to any one of claims 1 to 3,
wherein a diameter of the one end of the stud bolt is larger than that of the other end of the stud bolt

5. The impeller fastening structure according to any one of claims 1 to 4, further comprising:
a second centering portion for aligning the second axis and the third axis.

6. The impeller fastening structure according to any one of claims 3 to 5, further comprising:
a third centering portion for aligning the first axis and the third axis.

7. A turbo compressor, comprising: a rotor in which a rotating shaft and an impeller are fastened to each other by the impeller fastening structure according to any one of claims 1 to 6.

8. An impeller fastening structure, comprising: a rotating shaft in which an attachment hole is formed on one end along a first axis; an impeller in which a through hole is formed along a second axis; a stud bolt which is inserted into the through hole and in which one end is screwed to the attachment hole; and a nut which is screwed to the other end of the stud bolt,
wherein the stud bolt includes an orthogonal surface orthogonal to a third axis, which is an axis of the stud bolt, on a tip of the one end side, and
wherein the rotating shaft includes a receiving portion which is orthogonal to the first axis and comes into contact with the orthogonal surface in an innermost portion of the attachment hole.

9. The impeller fastening structure according to claim 8, further comprising:
a first centering portion for aligning the second axis and the first axis.

10. The impeller fastening structure according to claim 8 or 9, further comprising:
a second centering portion for aligning the second axis and the third axis.

11. The impeller fastening structure according to any one of claims 8 to 10, further comprising:
a third centering portion for aligning the first axis and the third axis.

12. The impeller fastening structure according to claim 11, further comprising:
a third auxiliary centering portion for aligning the first axis and the third axis.

13. A turbo compressor, comprising a rotor in which a rotating shaft and an impeller are fastened to each other by the impeller fastening structure according to any one of claims 8 to 12.
